# EUROPEAN PATENT SPECIFICATION

(11) **EP 4 276 713 B1**
(45) Date of publication and mention of the grant of the patent: **12.08.2026**
(21) Application number: 21917754.0
(22) Date of filing: 27.12.2021
(51) Int. Cl.: G06Q 10/00, G05B 19/418, G05B 23/02, G06Q 10/20, G06Q 50/08, G16Y 10/30, G16Y 20/20, G06Q 10/087

(54) **MAINTENANCE ASSISTANCE SYSTEM**
WARTUNGSUNTERSTÜTZUNGSSYSTEM
SYSTÈME D'AIDE À LA MAINTENANCE

(30) Priority: 08.01.2021 JP 2021002368
(43) Date of publication of application: 15.11.2023
(73) Proprietor: Hitachi Construction Machinery Co., Ltd., Tokyo 110-0015 (JP)
(72) Inventor: FENG, Yixiang, Tokyo 100-8280 (JP); SHINTANI, Hiroshi, Tokyo 100-8280 (JP)
(74) Representative: MERH-IP Matias Erny Reichl Hoffmann Patentanwälte PartG mbB
(86) International application number: PCT/JP2021/048683
(87) International publication number: WO 2022/149534

(56) References cited:
- JP-A- 2004 110 709
- JP-A- 2004 110 709
- JP-A- 2007 219 573
- JP-A- 2007 219 573
- JP-A- 2012 132 909
- JP-A- 2014 021 627
- JP-A- 2014 021 627
- US-B1- 8 666 791

## Description

### Technical Field

The present invention relates to a maintenance assistance system that defines a machine that operates for a long period of time, such as a construction machine (a hydraulic excavator or the like) and a power generation facility (wind power generation facility or the like), and parts of the machine as a management target machine and issues a notification of the need of maintenance when maintenance of the management target machine is required, to perform assistance of the maintenance.

### Background Art

For a machine that continuously operates for a long period of time, like a construction machine such as a hydraulic excavator, improvement of an operation rate is demanded such that the revenue of a client (an owner, a user, an agency, a business office or the like of the machine) increases. In order to meet this demand, it is important to minimize the period for which the machine is inoperable. In particular, it is important to carry out parts replacement early before the machine fails or to have the machine repaired rapidly if the machine fails. As one of effective means for this, a system is available which monitors the state of the machine all the time and issues a notification of a maintenance request for the machine appropriately to a predetermined notification target person (a maintenance personnel, a department in charge of maintenance, or the like). As a technology in this field, an example is known in which a soundness indicator of the machine of the monitoring target is calculated from operation data and an alarm is outputted when the soundness indicator deviates from a soundness state value obtained from a machine that is in a sound state (Patent Document 1). Patent Document 2 discloses a maintenance management device for an operating machine that diagnoses whether or not an abnormality has occurred in sensor data of the operating machine.
Patent Document 3 discloses a method and apparatus for the disintermediation and aggregation of purchasing and acquisition of products and services for various industries.

### Prior Art Document

### Patent Document

Patent Document **1:** JP-2012-132909-A
Patent Document 2: JP 2014021627 A
Patent Document 3: US 8666791 B1

### Summary of the Invention

### Problem to be Solved by the Invention

By applying the technology of Patent Document 1 described above, it is possible to issue a notification of a maintenance request for a machine to a predetermined notification target person on the basis of a soundness indicator computed from operation data to encourage the arrangement of required items to be used for the maintenance.

However, the supplier or the inventory status differs depending upon the parts, and the period required for procurement of the parts is indefinite. Especially in regard to a machine having a complicated structure like a construction machine, the number of components is huge, and also the supplier, inventory status, and the like of parts are diverse. Therefore, merely if a request for maintenance is issued simply on the basis of operation data on a machine, there is a possibility that an unexpectedly long period of time may be required for parts procurement and a required item may not become available at a scheduled timing of a maintenance work. In this case, there is a possibility that the period for which the machine is inoperable may become very long, resulting in increase in the operating cost of the client due to reduction in the operation rate of the machine.

On the other hand, it is also conceivable to estimate periods supposed for parts procurement uniformly long such that a required item can be arranged with a margin. However, to this end, it is necessary for the soundness of the machine to be decided early. In this case, there is a possibility that the tendency that an alarm is transmitted in a state in which the sampling amount of operation data that serves as the base for decision is insufficient may be increased. As a result, despite that the machine is normal in reality, it may be erroneously decided that the machine is abnormal, and if parts replacement or parts ordering, which originally is not needed, is performed, then there is a possibility that this may also increase the operating cost of the client.

An object of the present invention resides in provision of a maintenance assistance system that issues a notification of a maintenance request for a machine to a predetermined notification target person at an appropriate timing, taking a period required for parts procurement into account such that the period for which the machine is inoperable can be reduced efficiently and unnecessary parts replacement works can be reduced.

### Means for Solving the Problem

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. In order to achieve the object described above, according to the present invention, there is provided a maintenance assistance system that outputs an alarm for a notification of a maintenance request for a management target machine to a predetermined outputting apparatus, including: an operation data database in which operation data on the management target machine is accumulated; a required item database in which required items to be used for maintenance of the management target machine for each failure item and quantities of the required items are defined; a failure case database in which data in a past for a period after an abnormal decision is made on the basis of an evaluation value computed for evaluating soundness of the management target machine until a failure actually occurs is accumulated; a parts inventory database in which data on an inventory quantity for each of the required items is accumulated; and a processing apparatus that generates the alarm and outputs the generated alarm to the outputting apparatus, in which the processing apparatus is configured to compute the evaluation value on the basis of the operation data database, decide, on the basis of the evaluation data, whether the management target machine is normal or abnormal, estimate required items to be used for maintenance and a quantity of the required items in regard to a failure item whose occurrence is predicted on the basis of the required item database, when an abnormality decision is made in regard to the management target machine, estimate, on the basis of the evaluation value on which the abnormality decision is based and the failure case database, a grace period before failure occurrence is predicted in regard to the failure item whose occurrence is predicted, estimate a procurement period required for procurement of the required items from the parts inventory database, and output the alarm for the notification of the maintenance request including information of the failure item whose occurrence is predicted and the required items to the outputting apparatus, when a value obtained by subtracting the procurement period from the grace period is equal to or lower than a set value set in advance.

### Advantages of the Invention

According to the present invention, by issuing a notification of a maintenance request for the machine at an appropriate timing, taking a period required for parts procurement into account, the period for which the machine is inoperable can be reduced efficiently, and unnecessary parts replacement works can be reduced.

### Brief Description of the Drawings

FIG. 1 is a perspective view depicting an appearance of a hydraulic excavator as an example of a management target machine to which a maintenance assistance system according to an embodiment of the present invention is applied.
FIG. 2 is a schematic view of the maintenance assistance system according to the embodiment of the present invention.
FIG. 3 is a schematic view of various databases provided in the maintenance assistance system according to the embodiment of the present invention.
FIG. 4 is a schematic view depicting a failure case database used in the maintenance assistance system according to the embodiment of the present invention.
FIG. 5 is a schematic view of a required item database used in the maintenance assistance system according to the embodiment of the present invention.
FIG. 6 is a block diagram of a processing apparatus that configures the maintenance assistance system according to the embodiment of the present invention.
FIG. 7 is an explanatory view of an example of abnormality decision with use of an evaluation value.
FIG. 8 is a view depicting an example of an output result in a process for inventory estimation by the processing apparatus that configures the maintenance assistance system according to the embodiment of the present invention.
FIG. 9 is a flow chart depicting an example of a procedure for procurement time prediction by the processing apparatus that configures the maintenance assistance system according to the embodiment of the present invention.
FIG. 10 is a view depicting an example of an output result of the process for procurement time prediction by the processing apparatus that configures the maintenance assistance system according to the embodiment of the present invention.
FIG. 11 is a view depicting an example of a relation between an evaluation value and a grace period.
FIG. 12 is a view depicting an example of an alarm notification by the processing apparatus that configures the maintenance assistance system according to the embodiment of the present invention.
FIG. 13 is a flow chart schematically depicting an example of a sequence of steps to an alarm notification by the processing apparatus that configures the maintenance assistance system according to the embodiment of the present invention.

### Modes for Carrying Out the Invention

In the following, an embodiment of the present invention is described with reference to the drawings.

### -Management Target Machine-

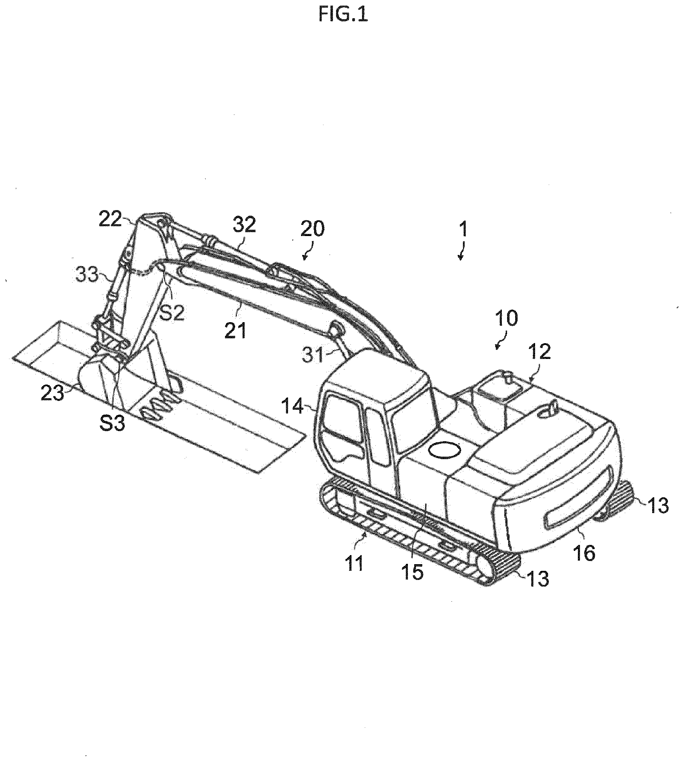

FIG. 1 is a perspective view depicting an appearance of a hydraulic excavator as an example of a management target machine to which a maintenance assistance system according to an embodiment of the present invention is applied. In the following description, the front (upper left side in FIG. 1) of a cabin 14 is set as the front of the swing structure of the hydraulic excavator. Although the present embodiment is described taking a hydraulic excavator as an example of the management target machine of the maintenance assistance system of the present invention, the maintenance assistance system of the present invention can be applied also to maintenance assistance of other construction machines such as, for example, a dump truck and machines in other fields such as a wind generator.

A hydraulic excavator 1 depicted in FIG. 1 includes a machine body 10 and a work device 20. The machine body 10 includes a track structure 11 and a swing structure 12.

The track structure 11 includes left and right crawlers (track devices) 13 each having a crawler belt, and travels by driving the left and right crawlers 13 by left and right track motors (not depicted), respectively. For example, a hydraulic motor is used for the track motors.

The swing structure 12 is provided swingably at an upper portion of the track structure 11 through a swing device (not depicted). At a front portion (in the present embodiment, on the front portion left side) of the swing structure 12, a cabin 14 in which an operator is to board is provided. On the rear side of the swing structure 12 behind the cabin 14, a power room 15 in which an engine, a hydraulic system, and the like are accommodated is mounted, and at a rear end of the swing structure 12, a counterweight 16 for making a balance of weight with the work device 20 is mounted. The swing device that couples with the swing structure 12 to the track structure 11 includes a swing motor (not depicted), and the swing structure 12 is driven to swing with respect to the track structure 11 by the swing motor. For example, a hydraulic motor is used for the swing motor 34. In the cabin 14, a monitor (outputting apparatus) is provided at a position at which the monitor can be visually recognized readily from the driving seat such that the operator sitting on the driving seat can be notified of various kinds of information by the monitor or the like.

The work device 20 is an articulated working arm for performing a work such as excavation of earth and sand and is attached to a front portion (in the present embodiment, on the right side of the cabin 14) of the swing structure 12. This work device 20 includes a boom 21, an arm 22, and a bucket 23. The boom 21 is coupled with a base frame of the swing structure 12 called a swing frame by a pin (not depicted) extending leftwardly and rightwardly and is driven by a boom cylinder 31 to pivot upwardly and downwardly with respect to the swing structure 12. The boom cylinder 31 is coupled at the opposite ends thereof pivotably with the boom 21 and the swing structure 12 through a pin (not depicted) extending leftwardly and rightwardly. The arm 22 is coupled with a distal end of the boom 21 by a pin (not depicted) extending leftwardly and rightwardly and is driven by an arm cylinder 32 to pivot forwardly and rearwardly with respect to the boom 21. The arm cylinder 32 is coupled at the opposite ends thereof pivotably with the arm 22 and the boom 21 through a pin (not depicted) extendingleftwardly and rightwardly. The bucket 23 is coupled with a distal end of the arm 22 by a pin (not depicted) extending horizontally leftwardly and rightwardly and is driven by a bucket cylinder 33 to pivot with respect to the arm 22. The bucket cylinder 33 is connected at a proximal end thereof to the arm 22 and coupled at a distal end thereof with the bucket through a link.

Further, a plurality of sensors for sensing various state quantities during operation are provided at suitable places of the hydraulic excavator 1. As examples of the sensors, angle sensors S1 (not depicted), S2, and S3 are provided at the fulcra of the pivotal motion of the boom 21, the arm 22, and the bucket 23, respectively. The angle of the boom 21 with respect to the swing structure 12 is detected.by the angle sensor S1; the angle of the arm 22 with respect to the boom 21 is detected by the angle sensor S2; and the pivotal angle of the bucket 23 with respect to the arm 22 is detected by the angle sensor S3. The hydraulic excavator 1 further includes an inclination sensor (not depicted) and a pressure sensor (not depicted). The inclination sensor detects the inclination of the swing structure 12 in at least one of the forward and rearward direction and the leftward and rightward direction. A plurality of pressure sensors are provided corresponding to oil chambers of the boom cylinder 31, the arm cylinder 32, and the bucket cylinder 33. The pressures in the oil chamber on the bottom side and the rod side of the boom cylinder 31, the pressures in the oil chamber on the bottom side and the rod side of the arm cylinder 32, and the pressures on the bottom side and the rod side in the oil chamber of the bucket cylinder 33 are detected by the individually corresponding pressure sensors. In addition, various sensors such as an electric power meter for measuring the power generation amount of a generator incorporated in the hydraulic excavator 1, a rotation speed sensor for measuring the speed of rotation of a prime mover, thermometers for measuring the temperature of cooling water and hydraulic fluid, and an accelerometer for measuring machine body vibration are provided on the hydraulic excavator 1. A circuit that outputs a remaining charge amount of a battery is also a kind of sensor.

Detection values of these sensors are inputted to an in-vehicle controller (not depicted) incorporated in the hydraulic excavator 1 and are transmitted as operation data on the hydraulic excavator 1 to a processing apparatus 100 hereinafter described together with a machine body ID of the hydraulic excavator 1 and measurement time through a communication line from the in-vehicle controller. Further, in the case of the present embodiment, data on operation time of the prime mover and various kinds of operation time counted by timers, position data on the machine body by a GNSS device incorporated in the hydraulic excavator 1, and the like are transmitted as operation data from the in-vehicle controller to the processing apparatus 100 together with outputs of the sensors.

### -Maintenance Assistance System-

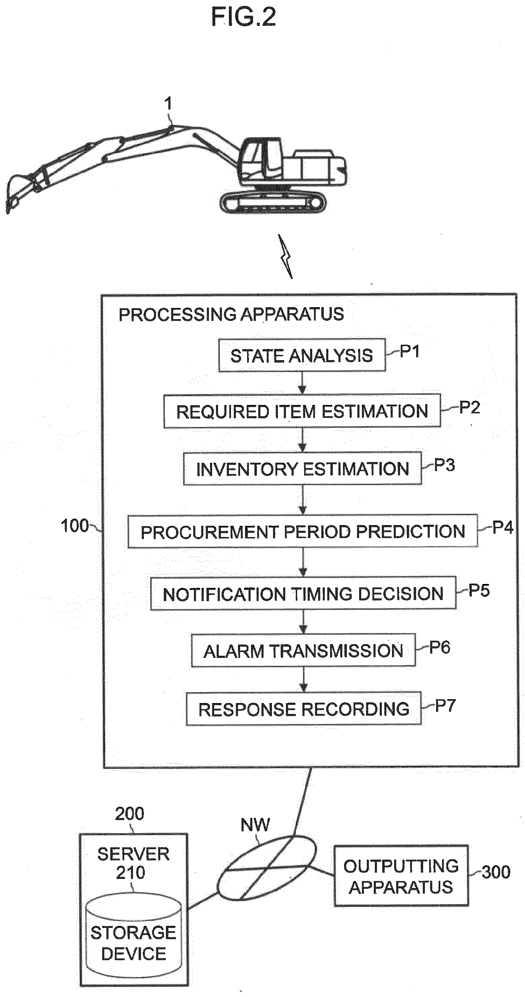

FIG. 2 is a schematic view of the maintenance assistance system according to the embodiment of the present invention. The maintenance assistance system of FIG. 2 is a system that outputs an alarm for the notification of a maintenance request for the hydraulic excavator 1 (management target machine) to a predetermined outputting apparatus 300 to notify a predetermined notification target person (a maintenance personnel, a department in charge of maintenance, or the like) of the alarm thereby to assist the maintenance of the hydraulic excavator 1.

This maintenance assistance system is configured including a processing apparatus 100, a server 200, and an outputting apparatus 300. FIG. 2 exemplifies a configuration in which the processing apparatus 100, the server 200, and the outputting apparatus 300 are connected to each other through a network NW such as a LAN (Local Area Network) or the Internet. However, such a system configuration as just described can be altered suitably, and, for example, a configuration in which the processing apparatus 100 and the outputting apparatus 300 are connected to each other by wired or wireless connection may be adopted. A configuration in which a monitor as the outputting apparatus 300 is connected to a computer as the processing apparatus 100 is an example. Alternatively, a configuration in which the server 200 is omitted and each of databases (in the following description, each database is referred to simply as a DB) is stored in a storage device of the processing apparatus 100 can also be applied. In the following, the outputting apparatus 300, the server 200, and the processing apparatus 100 are described sequentially.

### -Outputting Apparatus-

The outputting apparatus 300 is an apparatus that outputs an alarm for requesting maintenance of the hydraulic excavator 1 to notify a predetermined notification target person of the maintenance request, and, for example, a display outputting apparatus, a sound outputting apparatus, and the like can be used as the outputting apparatus 300. Typical examples of the display outputting apparatus are a monitor, a lamp, and the like and notify the predetermined notification target person of an alarm in display (for example, a text message) according to a command signal inputted from the processing apparatus 100. Typical examples of the sound outputting apparatus are a speaker, a buzzer, and the like and notify the predetermined notification target person of an alarm with sound (for example, reading of a message) according to a command signal inputted from the processing apparatus 100. The outputting apparatus 300 is installed in facilities (for example, a management office or a service business office) in which the notification target person is on the register or resides or is carried by the predetermined notification target person (human). When the operator of the hydraulic excavator 1 is set as the notification target person, a display outputting apparatus, a sound outputting apparatus, and the like provided inside the cabin 14 can also be applied to the outputting apparatus 300.

### -Server-

The server 200 is a computer installed at a predetermined place and connected to the network NW, and is configured including a storage device (memory) 210 in which various DBs are to be stored. The various DBs can be configured such that they are stored in one storage device 210 and also can be configured such that they are stored in a plurality of storage devices 210 in a shared manner. The storage device 210 may be an internal memory built in the server 200 or may be an external memory connected by wired or wireless connection to the server 200. As described hereinabove, also such a configuration that the server 200 is omitted and the various DBs are stored in the storage device built in the processing apparatus 100 or stored in a storage apparatus connected to the processing apparatus 100 can be applied.

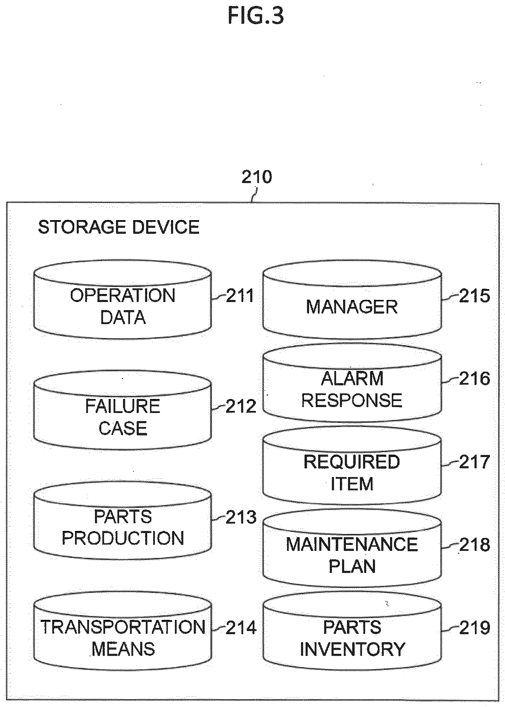

FIG. 3 is a schematic view of the various DBs provided in the maintenance assistance system according to the embodiment of the present invention. The storage device 210 stores therein an operation data DB 211, a failure case DB 212, a parts production DB 213, transportation means DB 214, a manager DB 215, an alarm response DB 216, a required item DB 217, a maintenance plan DB 218 and a parts inventory DB 219. The DBs stored in the storage device 210 typically are relational databases.

### ·Operation Data DB

The operation data DB 211 is an accumulation of data sets of operation data on the hydraulic excavator 1. The operation data on the hydraulic excavator 1 can include outputs of the various sensors described above, a battery remaining power, various measurement times, position data on the machine body by the GNSS, and a machinebody ID as well as movement information based on the position data, the date on manufacture of the machine body, specifications, and the like. The hydraulic excavator 1 is equipped with a communication device (not depicted), and outputs of the sensors, various measurement times, and the position data of the hydraulic excavator 1 are received by the processing apparatus 100 suitably through, for example, a satellite communication line or other communication network and a base station. The data received by the processing apparatus 100 is transmitted to the server 200 through the network NW and accumulated into the operation data DB 211. However, the transmission route of the operation data from the hydraulic excavator 1 to the server 200 can be changed suitably, and, for example, a configuration in which operation data on the hydraulic excavator 1 is transmitted from a base station to the server 200 without the intervention of the processing apparatus 100 may be applied. The operation data is accumulated for each of IDs of management target machines, and the operation data concerning the hydraulic excavator 1 is identifiable from operation data on any other management target machine.

### ·Failure Case DB

The failure case DB 212 is an accumulation of data in the past in a period from a timing at which an evaluation value "a" (hereinafter described) for evaluating the soundness of the hydraulic excavator 1 is computed and an abnormality decision is made on the basis of the evaluation value "a" to a timing at which a failure actually occurs. The failure case DB 212 includes not only failure cases in the past of the hydraulic excavator 1 (machine body of a specific ID) but also failure cases in the past of a large number of machine bodies of the same type as that of the hydraulic excavator 1 as well as other types of management target machines that are treated as management targets by the maintenance assistance system.

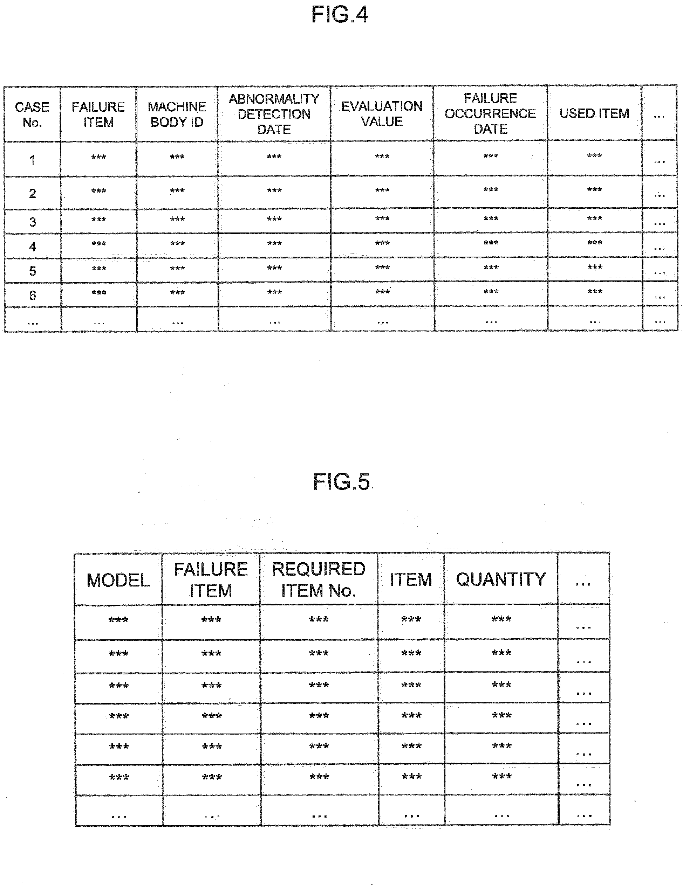

As depicted in FIG. 4, the failure case DB 212 has accumulated therein data sets of a case No., a failure item, a machine body ID, an abnormality detection date, an evaluation value, a failure occurrence date, an item having been used or arranged and the like. The case No. is a unique number given to each of failure cases in the past. The failure item represents contents of a failure such as, for example, degradation of a battery or damage to a tooth (tooth of the bucket). The machine body ID is an ID of the machine body in the failure case. When a machine type is not specified by the machine body ID, data on the machine type can also be included in the failure case DB 212. The abnormality detection date is a date when an abnormality of the hydraulic excavator 1 is detected on the basis of the evaluation value "a." The evaluation value is a value which is a basis for the abnormality decision on the abnormality detection date. The failure occurrence date is a date on which the hydraulic excavator 1 actually fails in the failure case. The item having been used or arranged is information of one or a plurality of replacement parts used for repair of the failure in the failure case, an arranged tool or facilities, and the like. In the present embodiment, the period from a timing at which an abnormality decision is made to a timing at which a failure actually occurs corresponds to a period (the number of days) from an abnormality detection date to a failure occurrence date, and a case is exemplified in which the period is represented by the abnormality detection date and the failure occurrence date.

### ·Parts Production DB

The parts production DB 213 is a database regarding production plans, arrival plans, and shipping plans of parts handled by suppliers (warehouses or the like) of the parts. The manager of each supplier shares (for example, by file sharing) information on production plans of parts with producers (manufacturers) of the parts, and data on a production plan of parts shared with a producer is registered in the parts production DB 213 by the manager of the supplier. An arrival plan or a shipping plan of parts is also registered in the parts production DB 213 by the manager of the supplier. However, a person who is to register data in the parts production DB 213 is optional, and for example, data on a production plan or an arrival/shipping plan of parts provided from the manager of a supplier may be registered in the parts production DB 213 by the maintenance personnel of the hydraulic excavator 1. Further, data on a production plan or an arrival/shipping plan of parts provided from the manager of a supplier through the network NW may be downloaded into the processing apparatus 100 or the server 200 after every fixed period of time such that the parts production DB 213 is automatically updated.

### ·Transportation Means DB

The transportation means DB 214 is an accumulation of data on an address of a supplier and transportation means for each required item. This transportation means DB 214 includes data sets of an address of a supplier, transportation, means, transportation time required for transportation and the like of required items-to be arranged for the maintenance of the hydraulic excavator 1. The required items to be arranged for the maintenance of the hydraulic excavator 1 can include, in addition to parts to be incorporated into the hydraulic excavator 1, tools and facilities to be used for the maintenance. The tools and the facilities to be used for the maintenance can include rented items to be arranged and used temporarily when required. As the transportation means, such information as, for example, air transportation by an α company, air transportation by a β company, marine transportation by a γ company; and land transportation by a δ company is registered manually or automatically on the basis of procurement performances of required items in the past or information provided from transportation companies. The transportation times can also be set by manual inputting from procurement performances in the past. However, when data on a schedule of navigation or operation is provided to the transportation means through the network NW, a transportation time may be set automatically on the basis of the downloaded schedule.

### ·Manager DB

The manager DB 215 is an accumulation of data sets of a manager (a business office or an agency) of the hydraulic excavator 1, an address of the manager, transportation means to be utilized, a required item procurement history in the past, and the like. The manager is, for example, a business office, an agency, or the like that undertakes the maintenance of the hydraulic excavator 1. The address of the manager corresponds to the destination of the required item, and not only the address of the manager but also the address of a place at which the manager performs a maintenance work of the hydraulic excavator 1 can be set. The transportation means to be utilized is transportation means that is very likely to be used by the manager. For example, when it can be supposed from procurement histories of required items that a certain business office utilizes land transportation by the δ company for procurement of parts, the land transportation by the δ company is registered as the transportation means utilized by the business office. It is preferable to configure the system such that, when the transportation means used in a procurement history of required items is changed, the transportation means to be utilized is automatically updated (or a choice of transportation means for manual selection is increased).

### ·Alarm Response DB

The alarm response DB 216 is an accumulation of data on a response performed by the maintenance personnel of the hydraulic excavator 1 in regard to an alarm being notified of from the maintenance assistance system. This alarm response DB 216 includes data sets of a date on which the maintenance personnel of the hydraulic excavator 1 issues an order for a required item to be used for the maintenance, an ordered item and its quality, a start date and time and an end date and time of the maintenance (maintenance) performed by the hydraulic excavator 1, and the like.

### ·Required Item DB

The required item DB 217 defines required items to be used for the maintenance and quantities of them for each failure item of the hydraulic excavator 1. The required item DB 217 includes data sets of a model, a failure item, a required item No., an item, a quantity, and the like as depicted in FIG. 5. The model is data for specifying a model such as a type of a management target machine. The failure item represents contents of a failure such as, for example, degradation of a battery similarly to the failure case DB 212 (FIG. 4). The required item No. is an identification number given to each required item used for maintenance of the failure item. The number of such required items is not necessarily one for one failure item, and a list of a plurality of items may be registered. The item is a name of each required item such as, for example, a pressure sensor, a ring, or a screw. The quantity is a required quantity for each required item. The required item and the quantity can be set manually by the maintenance personnel on the basis of responses of failure cases in the past, empirical rules, knowledge, and the like. Further, for example, the processing apparatus 100 may take statistics of at least one of the failure case DB 212 and the alarm response DB 216 such that data on the required item (required item No., item) and the quantity of the required item is automatically set or updated. In this case, it is desirable that the accumulation amount of data on the failure case DB 212 or the alarm response DB 216 be sufficient, and it is considerable that the processing is executed when the data accumulation amount exceeds a set value.

### ·Maintenance Plan DB

The maintenance plan DB 218 is a collection of data for each machine body (for each machine body ID) of management target machines in regard to a list and the like of items used for a maintenance plan and maintenance. This maintenance plan DB 218 includes data sets of, for example, a management target machine, a maintenance target portion, a planned start date of maintenance, a planned completion date of maintenance, a list of required items, and the like. The managementtarget machine is a machine body of a maintenance target and can be represented, for example, by a machine body ID. The maintenance target portion is a portion of the maintenance target of the machine body that is a management target such as, for example, a battery or a boom cylinder. The list of required items is a list of required items required for maintenance of the maintenance target portion and quantities of the required items.

### ·Parts Inventory DB

The parts inventory DB 219 is an accumulation of data on an inventory quantity for each required item. This parts inventory DB 219 includes data sets of a required item, a supplier, an attribute of the required item (a required item No., an item, a weight, a price, and the like), an inventory quantity, a sales performance, and the like. The supplier is a handling warehouse of the required item, an ordering destination of the required item, or the like. The required item No. is an identification number provided to the required item. The item is a name of the required item such as, for example, a pressure sensor, a ring, or a screw. The weight is a weight of the required item. The price is a sales price of the required item by its supplier. The inventory quantity is an inventory quantity of the required item at present which is carried by its supplier. The sales performance is a sales performance of the required item in the past by its supplier.

### -Processing Apparatus-

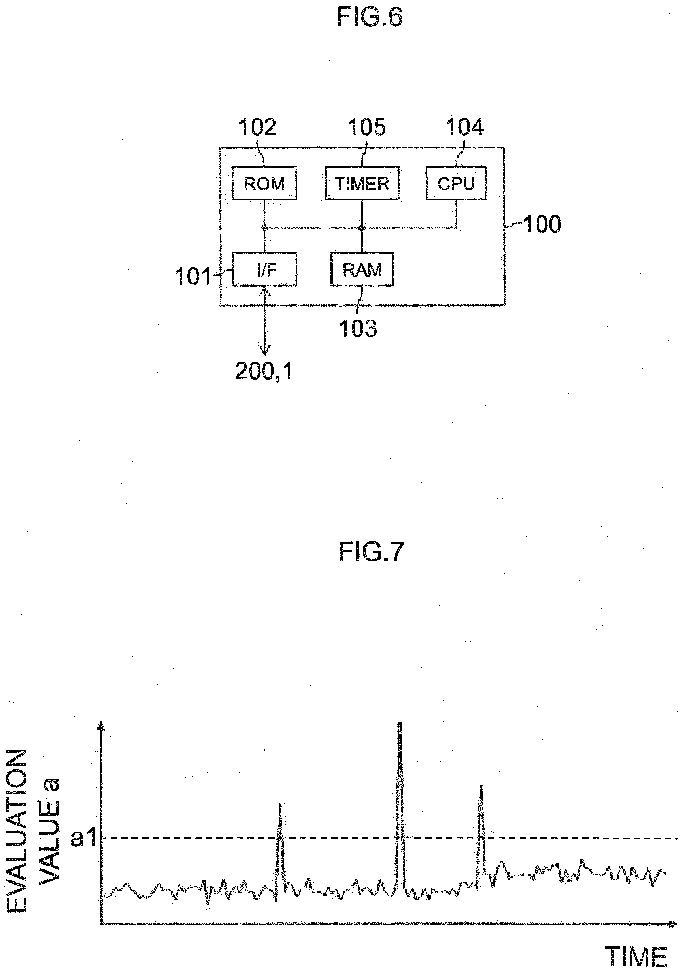

FIG. 6 is a block diagram of the processing apparatus 100. The processing apparatus 100 is a computer that generates and outputs an alarm to the outputting apparatus 300, and includes an input/output interface 101, a ROM (for example, an EPROM) 102, a RAM 103, a CPU 104, and a timer 105. Although the processing apparatus 100 may include a single computer, it may include a plurality of computers that are connected to each other by wired or wireless connection or through the network NW.

The input/output interface 101 inputs and outputs data to be transferred between the hydraulic excavator 1, the server 200, and the outputting apparatus 300 through the network NW. For example, operation data on the hydraulic excavator 1 received through the network NW or various pieces of data read from the server 200 are inputted to the processing apparatus 100 via the input/output interface 101. Meanwhile, data on an alarm and the like generated or computed by the processing apparatus 100 is outputted via the output interface 101 and suitably transmitted to the outputting apparatus 300, the server 200, or the hydraulic excavator 1 through the network NW.

The ROM 102 is a storage device in which computation expressions, programs, and data necessary for various decisions and generation of an alarm are stored. For example, programs of processes from a state analysis P1 to response recording P7 hereinafter described, learning models of classification of failure items by feature vectors, and the like are stored in the ROM 102.

The CPU 104 is a device that executes predetermined processes on the basis of pieces of data inputted via the input/output interface 101 according to a program loaded from the ROM 102 or the like.

The RAM 103 is a storage device that temporarily stores data being computed, and the like. Into this RAM 103, data computed in the procedure of the processes, and the like are temporarily stored.

The timer 105 counts various times.

### -Functions of Processing Apparatus-

The processing apparatus 100 has functions of executing various processes of state analysis P1, required item estimation P2, inventory estimation P3, procurement time prediction P4, alarm notification timing decision P5, alarm transmission P6, and response recording P7 as schematically depicted in FIG. 2. The functions are executed by the CPU 104 according to a program stored in the ROM 102.

### ·State Analysis

The state analysis P1 is a process of computing a predetermined evaluation value "a" in regard to the hydraulic excavator 1 on the basis of the operation data DB 211 and deciding whether the hydraulic excavator 1 is normal or abnormal on the basis of the computed evaluation value "a." The evaluation value "a" is a value defined for evaluating the soundness of a management target machine. For example, the processing apparatus 100 can compute the evaluation value "a" on the basis of a feature amount vector defined by operation data. For the computation of the evaluation value "a," typically an algorithm for data mining, machine learning, remaining life diagnosis, or the like can be used. For example, the failure item can be classified with a region in a feature amount space (coordinate system) in which a plurality of types of operation data are used as parameters. In this case, the distance between a feature amount vector defined by various pieces of operation data (coordinates in the feature amount space) and a representative point of a region classified to a certain failure item Z1 (for example, the center point) in the feature amount space can be exemplified as the evaluation value "a" in regard to the failure item Z1. For example, the processing apparatus 100 can be configured such that threshold values ax and ay (ax < ay) are set for the evaluation value "a" and if a ≤ ax, a failure in regard to the failure item Z1 is estimated, and if ax < a ≤ ay, a sign of a failure is estimated in regard to the failure item Z1.

Further, a simple example of the state analysis P1 in which an abnormality detection algorithm is used is described. For example, it is assumed that, if the hydraulic excavator 1 is in a sound state in regard to a failure item Z2 of the hydraulic excavator 1, a relation of Te = C × t is satisfied between the travel time t of the hydraulic excavator 1 and the engine temperature Te (C is a constant). When the relation of (Te = C × t) is defined as a normal model of the failure item Z2, if the feature amount vector defined by t and Te is separated exceeding a tolerance from the normal model, abnormality of the hydraulic excavator 1 is suspected in regard to the failure item Z2. The feature amount vector in this example is equal to coordinates on a coordinate system defined by t and Te. In this case, the evaluation value "a" can be computed by the following expression, for example, by use of a statistical algorithm called Mahalanobis-Taguchi method. $a = {\left(x-μ\right)}^{2} / {σ}^{2}$

Here, x is the feature amount vector, µ is an average value of the feature amounts, and σ is a variance of the feature amounts.

FIG. 7 is an explanatory view of an example of a typical abnormality decision with use of the evaluation value "a." As depicted in FIG. 7, a threshold value a1 is set for the evaluation value "a," and when the evaluation value "a" is higher than the threshold value a1 (a > a1), it can be decided that the evaluation value "a" is abnormal, and when the evaluation value "a" is equal to or lower than the threshold value a1 (a ≤ a1), it can be decided that the evaluation value "a" is normal. In this example, a learning model can be described by such a pseudo code as given below with use of the evaluation value "a" and the threshold value a1.

IF a ≥ a1 THEN the hydraulic excavator is abnormal. ELSE the hydraulic excavator is normal.

The example in which the evaluation value "a" is computed on the basis of the operation data DB 211 has been described in the description of the present embodiment. However, it isalso possible to compute the evaluation value "a" by having data relating to a construction plan at a site at which the hydraulic excavator 1 operates (a planned operation time, a work amount, and the like) and a maintenance history in the past (years of use of parts and the like) included in parameters together with operation data.

### ·Required Item Estimation.

The required item estimation P2 is a process of estimating required items to be used for the maintenance and quantities of the required items relating to a failure item in which occurrence of a failure is predicted on the basis of the required item DB 217, when an abnormality decision is made in regard to the hydraulic excavator 1. Items of the required items differ depending upon the failure item and may be a single type or a plurality of types depending upon the failure item.

### ·Inventory Estimation

The inventory estimation P3 is a process of estimating, in regard to each required item estimated by the process of the required item estimation P2, a future transition of the inventory quantity of a corresponding supplier. The processing apparatus 100 performs the process of the inventory estimation P3, for example, on the basis of the parts production DB 213 and the parts inventory DB 219. For example, an estimated value Nn of the inventory quantity of the part A of a corresponding supplier n days later can be estimated, for example, as represented by the following expression. $Nn = N 0 + ΣNin - ΣNout$

It is to be noted that NO is an inventory quantity at present; ΣNin is an estimated value of a total arrival item number (including a produced item number) of the part A in the next n days; and ΣNout is an estimated value of a total shipment item number of the part A in the next n days. NO can be specified from the parts inventory DB 219, and ΣNin and ΣNout can be computed from the parts production DB 213.

It is to be noted that, in this example, an example in which ΣNout is computed on the basis of the parts production DB 213 is described, and it is possible to compute ΣNout with the maintenance plan DB included in parameters together with the parts production DB 213. Since a maintenance plan, required items, and quantities of the required items of each management target machine can be specified from the maintenance plan DB, a demand forecast of the part A estimated from the data on them can be taken into account with respect to the computation of ΣNout.

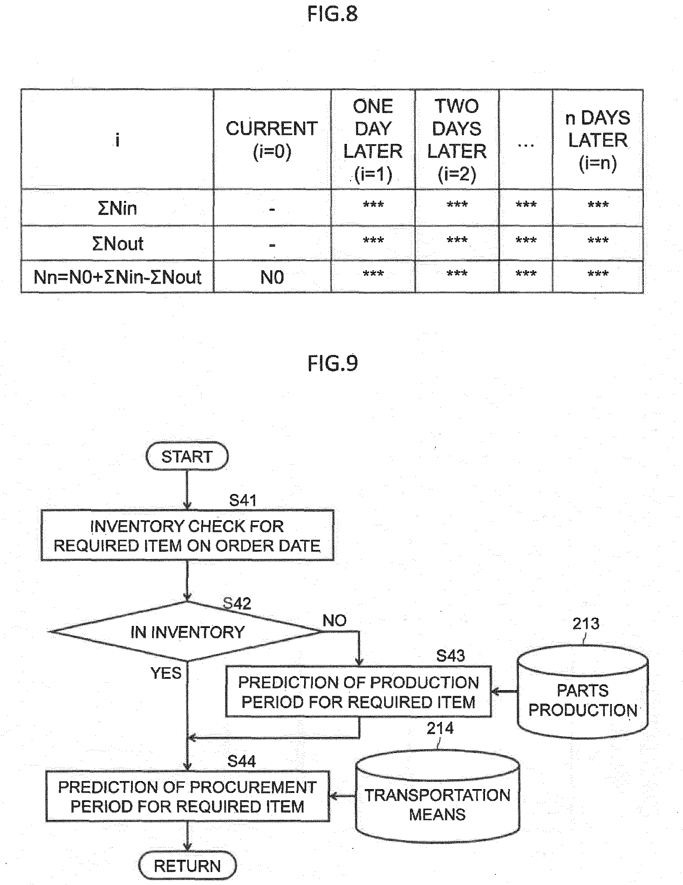

FIG. 8 is a view depicting an example of an output result in the process of the inventory estimation P3 by the processing apparatus 100. As depicted in FIG. 8, in the present embodiment, estimation values Nn of the inventory quantity of the part A one day later (i = 1), two days later (i = 2), ... and n days later (i = n) are computed as a transition of the inventory quantity.

### ·Procurement Time Prediction

The procurement time prediction P4 is a process of estimating a procurement period required for procurement of a required item estimated by the required item estimation P2 from the parts inventory DB 219. Since the parts inventory DB 219 includes data on the address of suppliers and inventory quantities of required items, the processing apparatus 100 can calculate a procurement period of any required item on the basis of the data.

Especially, in the present embodiment, since the process of the inventory estimation P3 is carried out as described hereinabove, a procurement period can be estimated and computed more accurately by taking an estimated inventory transition into account by the processing apparatus 100. In particular, a transportation period required for transportation of the required item from the supplier to a designated place can be computed on the basis of the transportation means DB 214 and the manager DB 215. The designated place is a place designated for reception of a required item registered in the manager DB 215 such as, for example, a material delivery place on site on which maintenance of the hydraulic excavator 1 is to be carried out. Although the transportation period can be computed as a movement period of transportation means according to a route, a period required from a timing of ordering to a supplier to a timing of an arrival at a designated place may be set on the basis of data in the past. When the data in the past is accumulated sufficiently, it is also possible to configure the processing apparatus 100 so as to use a machine learning algorithm such as a neural network and estimate transportation time.

On the other hand, when a required quantity of the required item is out of inventory in the supplier on the assumed order date, the procurement period is computed by adding a production period predicted to be required for production of the required item (for example, a period from a start of production to shipment) to the transportation period. The production period of the required item is computed by the processing apparatus 100 on the basis of the parts production DB (for example, data on a production plan).

For example, if a procurement period computed assuming that ordering is performed on the date two days later in FIG. 8 is taken as an example, if the estimated value Nn of the inventory quantity two days later satisfies the necessary quantity, the period obtained by adding two days to the transportation period is computed as the procurement period. However, if the estimated value Nn of the inventory quantity two days later does not satisfy the necessary quantity and it is predicted that the necessary quantity is secured 20 days later by production or arrival, the procurement period becomes a period obtained by adding 20 days to the transportation period.

FIG. 9 is a flow chart depicting an example of a procedure of the procurement time prediction P4 by the processing apparatus 100. The processing apparatus 100 executes the flow chart of FIG. 9 automatically after every set period (for example, one day) or at an optional timing according to an operation of the operator.

### (Step S41)

The processing apparatus 100 checks, in regard to the required item estimated by the process of the required item estimation P2, data on the estimated quantity of the inventory on a predetermined order data on the pertaining supplier from a result of the computation of the inventory estimation P3 after the procedure of FIG. 9 is started. The predetermined order date is a date (or date and hour) on which the order for the required item is assumed. As an example of the predetermined order date, for example, a date after a preset period from the date at present is available. The preset period can be freely set, considering, for example, a required period required for determination and ordering of the required item as a result of check of an alarm (hereinafter described) and consideration by the maintenance personnel or the like of the hydraulic excavator 1 after a notification of the alarm is issued. Alternatively, data in the past after an alarm notification to ordering may be mechanically learned such that a set period is set automatically.

### (Step S42)

Then, the processing apparatus 100 decides, on the basis of data on the estimated quantity of the inventory of the required item at the predetermined order date, whether or not the supplier has the required item in the necessary quantity in inventory on the predetermined order date. When the supplier does not have the required item in the necessary quantity in inventory on the predetermined order data (N), the processing apparatus 100 advances the procedure from step S42 to step S43. When the supplier has the required item in the necessary quantity in inventory on the predetermined order data (Y), the processing apparatus 100 advances the procedure from stepS42 to step S44 bypassing step S43.

### (Step S43)

When the supplier does not have the required item in the necessary quantity in inventory on the predetermined order date, the processing apparatus 100 computes, on the basis of the parts production DB (for example, data on a production plan), a predicted production period required for production of the required item (for example, a period from a start of production to shipment). After the predicted production period of the required item is computed, the processing apparatus 100 advances the procedure from step S43 to step S44.

### (Step S44)

After the procedure is advanced to step S44, the processing apparatus 100 estimates, on the basis of the transportation means DB 214 (data on the address of the supplier, transportation means, and the like), a procurement period required for procurement of the required item by the predetermined procurement means from the supplier. In this case, when the supplier has the required item in inventory, the processing apparatus 100 computes the transportation period (or a period obtained by adding the set period to the transportation period as occasion demands) as the procurement period. When it is predicted that the supplier does not have the required item in inventory on the date on which the order for the required item is assumed, the processing apparatus 100 refers to the transportation means DB 214 to compute a period obtained by further adding the production period of the required item to the transportation period (or a period obtained by adding the set period to the transportation period as occasion demands) as the procurement period. The production period of the required item is computed on the basis of the parts production DB 213.

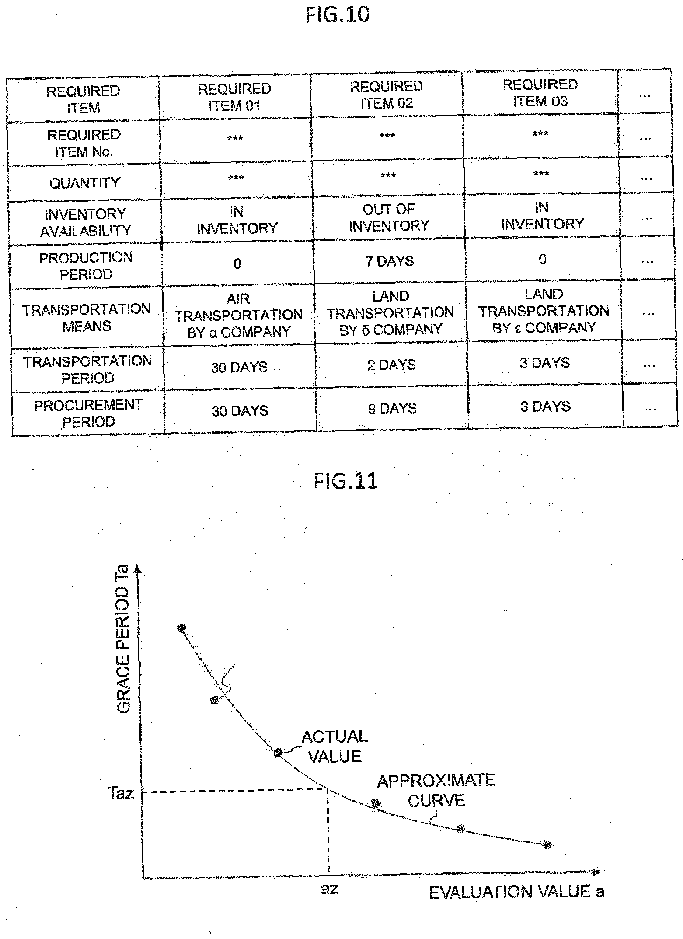

FIG. 10 is a view depicting an example of an output result in the process of the procurement time prediction P4 by the processing apparatus 100. As depicted in FIG. 10, in the present embodiment, inventory availability, a production period, transportation means, a transportation period and a procurement period are computed for a required item (in FIG. 10, for each of a plurality of required items) that is assumed as an order target.

### ·Alarm Notification Timing Decision

The alarm notification timing decision P5 is a process of estimating a grace period (a prediction period from the present point of time to occurrence of a failure) before occurrence of a failure in regard to a failure item that is predicted to occur in the hydraulic excavator 1 and deciding an appropriate timing for the notification of an alarm to the notification target person via the outputting apparatus 300.The grace period is executed by the processing apparatus 100 on the basis of the evaluation value "a," which is a basis of the abnormality decision made in regard to the hydraulic excavator 1 in the process of the state analysis P1 and the failure case DB 212. Giving a particular example, the grace period Ta and the evaluation value "a" have a fixed relation in each failure item, and if an evaluation value is computed by the expression (a = (x - µ)²/σ²) given hereinabove, the grace period decreases as the value of the evaluation value "a" increases, as indicated in FIG. 11.

FIG. 11 depicts an example in which the evaluation value and the grace period are taken as the axes and actual values are plotted from the failure case DB 212 in regard to a certain failure item such that the relation between the evaluation value "a" and the grace period Ta is represented by an approximate expression (an approximate curve). By using this approximate expression, it is possible to estimate a grace period Taz when the evaluation value az is computed in regard to the certain failure item. It is possible to compute such an approximate expression as just described for each failure item and compute the grace period Ta from the evaluation value "a" with use of the corresponding approximate expression. However, the computation method of the grace period of FIG. 11 is an example, and the computation method of the grace period Ta with use of the evaluation value "a" can be suitably altered, for example, to such a method that integrates the evaluation value "a" for the most recent set period set in advance and computes the grace period Ta on the basis of the integrated value.

Meanwhile, in regard to the decision of a timing of an alarm, an example is available in which it is decided whether a value obtained, for example, by subtracting a procurement time computed by the process of the procurement time prediction P4 from a grace period is equal to or lower than a set value set in advance and, when the obtained value is equal to or lower than the set value, it is decided that a timing for an alarm notification comes. The set value to be used here can be optionally set, for example, considering a setup period required from reception of a required item to a start of a maintenance work in the workplace in which maintenance of the hydraulic excavator 1 is to be carried out, and the like. Alternatively, data in the past from reception of a required item to a start of a maintenance work may be machine learned such that a set value is automatically set. When a notification of an alarm is issued simply when the grace period becomes equal to or shorter than the procurement time, it is sufficient if the set value is set to 0 (zero).

### ·Alarm Transmission

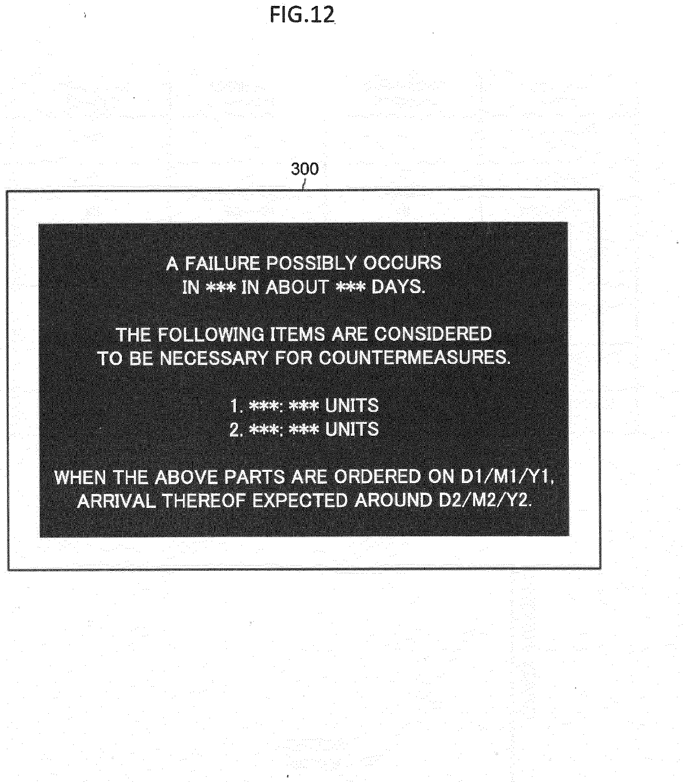

The alarm transmission P6 is a process of outputting, when it is decided by the process of the alarm notification timing decision P5 that the value obtained by subtracting the procurement period from the grace period is equal to or lower than the set value set in advance, an alarm for the notification of a maintenance request of the hydraulic excavator 1 to the outputting apparatus 300. The alarm includes information of a failure item whose occurrence is predicted, a required item (item and quantity), and the like as depicted in FIG. 12. FIG. 12 depicts an example of a screen image of the outputting apparatus 300 (monitor) for the notification of information of a failure item whose occurrence is predicted, a predicted timing of the failure, a required item and a quantity of the item required for the maintenance (countermeasure), a predicted procurement period, and the like, in the form of text information. This notification can be displayed continuously or at fixed time intervals until a reception procedure of the alarm (for example, an operation of a check button) is performed. In this case, when a change occurs in the procurement period or the like arising, for example, from the transition of the parts inventory or the like, as the time passes before the reception procedure of the alarm has been performed, it is also possible to update contents of the alarm at an appropriate timing such that the change is reflected on the alarm. This makes it possible for the maintenance personnel and the like to confirm the latest information having high accuracy.

It is to be noted that it is also conceivable to display a numerical value of the evaluation value "a" or such a figure as depicted in FIG. 7 on the screen of the alarm. When a notification of the evaluation value "a" is to be issued, for example, such evaluation values "a" may be classified into three levels of level 1, level 2, and level 3 according to the magnitude of the numerical value, and one of the levels may be displayed in place of the numerical value. As a matter of course, the level classification is not limited to classification into three levels and may be classification into two levels or four or more levels.

Further, as a form of an alarm, an alarm that uses warning sound, lamp lighting, an electronic mail, a telephone, or a fax may be adapted suitably.

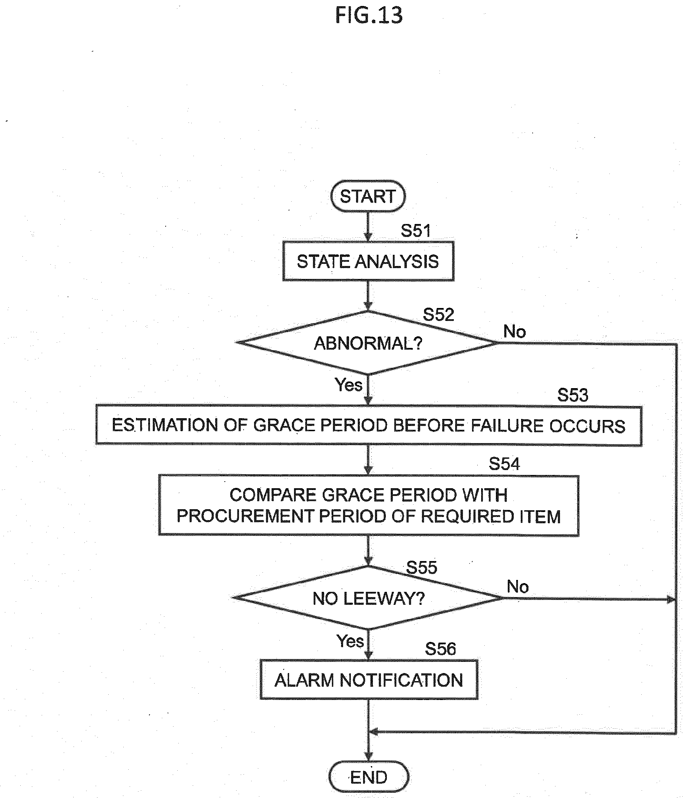

FIG. 13 is a flow chart schematically depicting an example of a sequence of steps to an alarm notification by the processing apparatus 100. The processing apparatus 100 executes the process of the flow chart of FIG. 13 automatically for every set period (for example, one day) or at an optional timing according to an operation by the maintenance personnel or the like. When an instruction for the execution of the process of FIG. 13 is provided manually to the processing apparatus 100, not only a configuration in which the processing apparatus 100 is operated directly but also, for example, a configuration in which an external terminal (including an installation type terminal and a portable terminal) that can be communicated with the processing apparatus 100 through the network NW is operated can be adopted.

### (Steps S51 and S52)

The processing apparatus 100 executes a process of the state analysis P1 described hereinabove and computes an evaluation value "a" in regard to the hydraulic excavator 1 (step S511) and decides on the basis of the computed evaluation value "a" whether the hydraulic excavator 1 is abnormal (step S52), after the procedure of FIG. 13 is started. When the hydraulic excavator 1 is not abnormal, the processing apparatus 100 ends the process of FIG. 13 and waits for a next opportunity for execution of the process of FIG. 13. When the hydraulic excavator 1 is abnormal, the processing apparatus 100 advances the procedure from step S52 to step S53. It is to be noted that, in the process of the state analysis P1, a failure item classified in the feature amount space is also estimated by a feature amount vector defined by various pieces of operation data on the hydraulic excavator 1. In this example, it is assumed that, as a result of the process, abnormality is recognized in regard to a certain failure item. Further, after a failure item is estimated, the processes of the required item estimation P2, inventory estimation P3, and procurement time prediction P4 are sequentially executed by the processing apparatus 100, so that a required item as well as a quantity and a procurement period of the required item are estimated.

### (Steps S53 to S55)

When abnormality is detected in regard to the certain failure item in the hydraulic excavator 1, the processing apparatus 100 executes the process of the alarm notification timing decision P5 and estimates a grace period before a failure occurs in the hydraulic excavator 1 (step S53). The processing apparatus 100 compares the estimated grace period with the procurement period of the required item (step S54), and if the procurement period has leeway with respect to the procurement period (if the difference is greater than the set value), the processing apparatus 100 ends the process of FIG. 13 and waits until a next opportunity for execution of the process of FIG. 13. On the other hand, if the procurement period has no leeway with respect to the grace period (if the difference is equal to or smaller than the set value), the processing apparatus 100 advances the procedure from step S55 to step S56.

### (Step S56)

After the procedure is advanced to step S56, the processing apparatus 100 outputs an alarm to the outputting apparatus 300 and notifies the notification target person of a maintenance request that includes information of the failure item for which a countermeasure is required, the grace period before occurrence of the failure, a required item required for the countermeasure, a quantity of the required item, and the like. After the alarm is outputted, the processing apparatus 100 ends the process of FIG. 13 and waits for a next opportunity for execution of the process of FIG. 13.

### ·Response Recording

The response recording P7 is a process of transmitting data on response contents carried out for the alarm by the maintenance personnel to the server 200 so as to be accumulated into the failure case DB 212, after the notification of the alarm. The data on the response contents includes data on an identification number of an alarm, an order date of a required item, an ordered quantity, a maintenance start date, a maintenance end date, and the like. The data on the response contents are inputted by an operation by the maintenance personnel, a customer, or the like of the processing apparatus 100 or an external terminal connected to the processing apparatus 100 through the network NW. An alternative configuration may also be applied in which the data on the response contents are uploaded directly to the server 200 without the intervention of the processing apparatus 100. The data on the response contents is useful not only for improvement in accuracy of the inventory estimation P3 and the alarm notification timing decision P5 but also for analysis for improvement of the customer satisfaction, and the like.

### -Advantages-

(1) In the present embodiment, a failure item is decided in regard to the hydraulic excavator 1, and a notification of a maintenance request is issued in the form of an alarm. This makes it possible for the maintenance personnel or the like to check the alarm and consider maintenance of the failure item or perform simple inspection of the hydraulic excavator 1 to check the propriety of the maintenance request. Further, it is possible to check a required item to be used for maintenance or rapidly consider the propriety of the maintenance. Further, the notification of this alarm is issued at an appropriate timing obtained by back calculation from a predicted timing of occurrence of the failure, considering a procurement period of the required item and the like. Accordingly, occurrence of such a situation that the required item cannot be obtained in time for the maintenance work because of a delay of the alarm can be prevented. Further, if only abnormality is detected, the notification of the alarm is not issued, and it is issued at a timing determined by considering the grace period before occurrence of the failure and the procurement period of the required item. Therefore, a request to a customer for parts ordering by a hasty alarm, which originally is unnecessary, can also be prevented, and occurrence of costs of useless parts can be prevented. Therefore, it is possible to notify a predetermined notification target person of a maintenance request for the hydraulic excavator 1 at an appropriate timing, taking a period required for procurement of the required item into account and effectively reduce the period within which the hydraulic excavator 1 is inoperable.
(2) Further, in the present embodiment, the evaluation value "a" is computed on the basis of a feature amount vector defined by various pieces of operation data on the hydraulic excavator 1. Consequently, for example, by utilizing machine learning or the like, as actual data is accumulated, it becomes possible to estimate a type or a sign of a failure, which is predicted to occur in the hydraulic excavator 1, with high accuracy.
(3) Since the procurement period for a required item is computed, taking the transition of the inventory quantity of the required item based on the parts inventory DB 219 and the parts production DB 213 and the transportation period of the required item based on the transportation means DB 214 into consideration, a procurement period of high propriety can be estimated. Especially, when shortage in inventory of a required item on the date on which ordering for the required item is assumed is predicted, the production period of the required item based on the parts production DB 213 is further taken into consideration, so that a procurement period for the required item can be estimated flexibly irrespective of whether or not the required item is in inventory.

### -Modifications-

Although the embodiment described above is directed to the example in which an evaluation value "a" is computed by comparison with a normal model in the state analysis P1, it is also possible to use a remaining life diagnosis algorithm such as the Weibull analysis to compute an estimated remaining life of the management target machine or a component of the same as the evaluation value "a." In this case, a grace period before occurrence of a failure with the management target machine can be computed with use of the estimated remaining life and a failure probability.

Although the embodiment described above exemplifies the configuration in which the sequence of processes from the state analysis P1 to the response recording P7 is executed by the processing apparatus 100, it is also possible for the processes to be executed by a management target machine with use of what is generally called edge computing technology. In particular, a configuration in which each of on-vehicle computers of individual management target machines (in the embodiment described above, the hydraulic excavators 1) is the processing apparatus 100 may be applied.

### Description of Reference Characters

1: Hydraulic excavator (management target machine)
100: Processing apparatus
211: Operation data database
212: Failure case database
213: Parts production database
214: Transportation means database
217: Required item database
219: Parts inventory database
300: Outputting apparatus
a: Evaluation value

## Claims

1. A maintenance assistance system that outputs an alarm for a notification of a maintenance request for a management target machine to a predetermined outputting apparatus (300), comprising:
an operation data database (211) in which operation data on the management target machine is accumulated;
a required item database (217) in which required items to be used for maintenance of the management target machine for each failure item and quantities of the required items are defined;
a failure case database (212) in which data in a past for a period after an abnormal decision is made on a basis of an evaluation value (a) computed for evaluating soundness of the management target machine until a failure actually occurs is accumulated;
a parts inventory database (219) in which data on an inventory quantity for each of the required items is accumulated;
transportation means database (214) in which data on an address of a supplier and transportation means for each of the required items is accumulated;
a parts production database (213) in which arrival plans and shipping plans of the required items are accumulated, and
a processing apparatus (100) that generates the alarm and outputs the generated alarm to the outputting apparatus (300), wherein
the processing apparatus (100) is configured to
compute the evaluation value (a) on a basis of the operation data database (211),
decide, on a basis of the evaluation data, whether the management target machine is normal or abnormal,
estimate required items to be used for maintenance and a quantity of the required items in regard to a failure item whose occurrence is predicted on a basis of the required item database (217), when an abnormality decision is made in regard to the management target machine,
estimate, on a basis of the evaluation value (a) on which the abnormality decision is based and the failure case database (212), a grace period before failure occurrence is predicted in regard to the failure item whose occurrence is predicted,
**characterized in that**
estimate a procurement period required for procurement of the required items from the parts inventory database (219),
estimate a transition of the inventory quantity from the present to n days later in regard to the required items on a basis of a current inventory quantity of the required items recorded in the parts inventory database (219), and the arrival plans and shipping plans for the required items from the present to n days later recorded in the parts production database (213),
compute a transportation period required for transportation of the required items on a basis of the transportation means database (214),
compute a period after the required items are ordered until the required items arrive at a designated place on a basis of the transition of the inventory quantity and the transportation period as the procurement period, and
output the alarm for the notification of the maintenance request including information of the failure item whose occurrence is predicted and the required items to the outputting apparatus (300), when a value obtained by subtracting the procurement period from the grace period is equal to or lower than a set value set in advance.

2. The maintenance assistance system according to claim 1,
wherein the processing apparatus (100) is configured to compute the evaluation value (a) on a basis of a feature amount vector defined by the operation data.

3. The maintenance assistance system according to claim 1,
wherein the processing apparatus (100) is configured to compute a production period of the required items on a basis of the parts production database (213), add the production period to the transportation period, and compute the procurement period, when it is estimated that the required items are out of inventory on a date on which ordering of the required items is assumed.

## Patentansprüche

1. Wartungsunterstützungssystem, das an eine vorgegebene Ausgabevorrichtung (300) einen Alarm für eine Meldung einer Wartungsanforderung für eine Managementzielmaschine ausgibt, wobei das Wartungsunterstützungssystem umfasst:
eine Betriebsdaten-Datenbank (211), in der Betriebsdaten über die Managementzielmaschine aufgespeichert sind;
eine Datenbank (217) erforderlicher Artikel, in der erforderliche Artikel, die für die Wartung der Managementzielmaschine für jeden Defektartikel verwendet werden sollen, und Anzahlen der erforderlichen Artikel definiert sind;
eine Defektfall-Datenbank (212), in der Daten in einer Vergangenheit für ein Zeitintervall, nachdem eine anomale Entscheidung getroffen wird, auf einer Grundlage eines Bewertungswerts (a), der zum Bewerten der Verlässlichkeit der Managementzielmaschine, bis ein Defekt tatsächlich auftritt, berechnet wird, aufgespeichert sind;
eine Teilebestands-Datenbank (219), in der für jeden der erforderlichen Artikel Daten über eine Bestandsanzahl aufgespeichert sind;
eine Transportmittel-Datenbank (214), in der für jeden der erforderlichen Artikel Daten über eine Adresse eines Lieferanten und Transportmittel aufgespeichert sind;
eine Teileproduktions-Datenbank (213), in der Ankunftspläne und Versandpläne der erforderlichen Artikel aufgespeichert sind, und
eine Verarbeitungsvorrichtung (100), die den Alarm erzeugt und den erzeugten Alarm an die Ausgabevorrichtung (300) ausgibt, wobei
die Verarbeitungsvorrichtung (100) konfiguriert ist zum:
Berechnen des Bewertungswerts (a) auf einer Grundlage der Betriebsdaten-Datenbank (211),
Entscheiden, ob die Managementzielmaschine normal oder anomal ist, auf einer Grundlage der Bewertungsdaten,
Schätzen erforderlicher Artikel, die für die Wartung verwendet werden sollen, und einer Anzahl der erforderlichen Artikel hinsichtlich eines Defektartikels, dessen Auftreten vorhergesagt wird, auf einer Grundlage der Datenbank (217) erforderlicher Artikel, wenn hinsichtlich der Managementzielmaschine eine Anomalieentscheidung getroffen wird,
Schätzen einer Karenzzeitdauer, bevor das Defektauftreten hinsichtlich Defektartikels, dessen Auftreten vorhergesagt wird, vorhergesagt wird, auf einer Grundlage des Auswertungswerts (a), auf dem die Anomalieentscheidung beruht, und der Defektfall-Datenbank (212),
**gekennzeichnet durch**
Schätzen einer Beschaffungszeitdauer, die für die Beschaffung der erforderlichen Artikel erforderlich ist, aus der Teilebestands-Datenbank (219),
Schätzen eines Übergangs der Bestandsanzahl von der Gegenwart bis n Tage später hinsichtlich der erforderlichen Artikel auf einer Grundlage einer aktuellen Bestandsanzahl der erforderlichen Artikel, die in der Teilebestands-Datenbank (219) aufgezeichnet ist, und der Ankunftspläne und Versandpläne für die erforderlichen Artikel von der Gegenwart bis n Tage später, die in der Teileproduktions-Datenbank (213) aufgezeichnet sind,
Berechnen einer Transportzeitdauer, die für den Transport der erforderlichen Artikel erforderlich ist, auf einer Grundlage der Transportmittel-Datenbank (214),
Berechnen einer Zeitdauer, nachdem die erforderlichen Artikel bestellt worden sind, bis die erforderlichen Artikel an einem bestimmten Ort ankommen, auf einer Grundlage des Übergangs der Bestandsanzahl und der Bestandszeitdauer als die Beschaffungszeitdauer, und
Ausgeben des Alarms für die Meldung der Wartungsanforderung, der Informationen des Defektartikels, dessen Auftreten vorhergesagt wird, und der erforderlichen Artikel enthält, an die Ausgabevorrichtung (300), wenn ein Wert, der durch Subtrahieren der Beschaffungszeitdauer von der Karenzzeitdauer erhalten wird, gleich oder kleiner als ein im Voraus eingestellter Sollwert ist.

2. Wartungsunterstützungssystem nach Anspruch 1,
wobei die Verarbeitungsvorrichtung (100) konfiguriert ist, den Bewertungswert (a) auf einer Grundlage eines durch die Betriebsdaten definierten Merkmalsmengenvektors zu berechnen.

3. Wartungsunterstützungssystem nach Anspruch 1,
wobei die Verarbeitungsvorrichtung (100) konfiguriert ist, eine Produktionszeitdauer der erforderlichen Artikel auf einer Grundlage der Teileproduktions-Datenbank (213) zu berechnen, die Produktionszeitdauer zu der Transportzeitdauer zu addieren und die Beschaffungszeitdauer zu berechnen, wenn geschätzt wird, dass die erforderlichen Artikel zu einem Datum, an dem die Bestellung der erforderlichen Artikel angenommen wird, nicht am Lager sind.

## Revendications

1. Système d'aide à la maintenance qui sort une alarme pour une notification d'une requête de maintenance pour une machine cible de gestion vers un appareil de sortie prédéterminé (300) comprenant :
une base de données de fonctionnement (211) dans laquelle sont accumulées des données de fonctionnement concernant la machine cible de gestion ;
une base de données d'éléments requis (217) dans laquelle sont définis des éléments requis à utiliser pour une maintenance de la machine cible de gestion pour chaque élément défaillant et des quantités des éléments requis ;
une base de données de cas de défaillance (212) dans laquelle sont accumulées des données dans un passé pendant une période après qu'une décision d'anomalie soit prise à partir d'une valeur d'évaluation (a) calculée pour évaluer une fiabilité de la machine cible de gestion jusqu'à ce qu'une défaillance se produise réellement ;
une base de données d'inventaire de pièces (219) dans laquelle sont accumulées des données concernant une quantité d'inventaire pour chacun des éléments requis ;
une base de données de moyens de transport (214) dans laquelle sont accumulées des données concernant une adresse d'un fournisseur et un moyen de transport pour chacun des éléments requis ;
une base de données de production de pièces (213) dans laquelle sont accumulés des plans d'arrivée et des plans d'expédition des éléments requis, et
un appareil de traitement (100) qui génère l'alarme et qui sort l'alarme générée vers l'appareil de sortie (300), dans lequel
l'appareil de traitement (100) est configuré pour
calculer la valeur d'évaluation (a) à partir de la base de données de fonctionnement (211),
décider, à partir des données d'évaluation, si la machine cible de gestion est normale ou anormale,
estimer des éléments requis à utiliser pour une maintenance et une quantité des éléments requis concernant un élément défaillant dont une occurrence est prédite à partir de la base de données d'éléments requis (217), quand une décision d'anomalie est prise concernant la machine cible de gestion,
estimer, à partir de la valeur d'évaluation (a) sur laquelle repose la décision d'anomalie et de la base de données de cas de défaillance (212), une période de grâce avant qu'une occurrence de défaillance soit prédite concernant l'élément défaillant dont l'occurrence est prédite,
caractérisé en ce en ce qu'il est configuré pour
estimer une période d'approvisionnement requise pour se procurer les éléments requis à partir de la base de données d'inventaire de pièces (219), estimer une transition de la quantité d'inventaire à partir du moment présent jusqu'à n jour plus tard concernant les éléments requis à partir d'une quantité d'inventaire actuelle des éléments requis enregistrés dans la base de données d'inventaire de pièces (219), et les plans d'arrivée et les plans d'expédition pour les éléments requis à partir du moment présent jusqu'à n jours plus tard enregistrés dans la base de données de production de pièces (213),
calculer une période de transport requise pour transporter les éléments requis à partir de la base de données de moyens de transport (214),
calculer une période après que les éléments requis sont commandés jusqu'à ce que les éléments requis arrivent à un emplacement désigné à partir de la transition de la quantité d'inventaire et de la période de transport à titre de période d'approvisionnement, et
sortir l'alarme pour la notification de la requête de maintenance incluant des informations de l'élément défaillant dont l'occurrence est prédite et des éléments requis vers l'appareil de sortie (300), quand une valeur obtenue par soustraction de la phase d'approvisionnement de la période de grâce est égale ou inférieure à une valeur de consigne définie à l'avance.

2. Système d'aide à la maintenance selon la revendication 1,
dans lequel l'appareil de traitement (100) est configuré pour calculer la valeur d'évaluation (a) à partir d'un vecteur de quantité caractéristique défini par les données de fonctionnement.

3. Système d'aide à la maintenance selon la revendication 1,
dans lequel l'appareil de traitement (100) est configuré pour calculer une période de production des éléments requis à partir de la base de données de production de pièces (213), ajouter la période de production à la période de transport, et calculer la période d'approvisionnement quand il est estimé que les éléments requis sont hors de l'inventaire à une date à laquelle une commande des éléments requis est supposée.
